# EUROPÄISCHE PATENTANMELDUNG

(11) **EP 2 083 202 A2**
(43) Veröffentlichungstag der Anmeldung: **29.07.2009**
(21) Anmeldenummer: 08021608.8
(22) Anmeldetag: 12.12.2008
(51) Int. Cl.: F16L 5/10, F16L 39/06, B60H 1/00

(54) **Durchführungsvorrichtung**

(30) Priorität: 23.01.2008 DE 102008005784
(71) Anmelder: Behr GmbH & Co. KG, 70469 Stuttgart (DE)
(72) Erfinder: Schmalzried, Michael, 70197 Stuttgart (DE); Schall, Matthias, 73760 Ostfildern-Ruit (DE); Müller, Harald, 70469 Stuttgart (DE)
(74) Vertreter: Messnarz, Dieter

(57) **Zusammenfassung**

Die Erfindung betrifft eine Durchführungsvorrichtung (1, 21) für Fluidrohrleitungen (5, 7). Die Durchführungsvorrichtung (1, 21) wird in der Ausnehmung (11) eines flächig ausgebildeten Kraftfahrzeugbauteils (12) montiert. Sie weist wenigstens einen Grundkörper (2, 3) mit wenigstens einer Durchgangsöffnung (6, 8) zur Aufnahme einer Fluidrohrleitung (5, 7), sowie wenigstens eine Einbringvorrichtung (4) zum seitlichen Einbringen der zumindest einen Fluidrohrleitung (5, 7) in die Durchgangsöffnung (6, 8) auf.

## Beschreibung

Die Erfindung betrifft eine Durchführungsvorrichfung für Fluidrohrleitungen zur Montage in der Ausnehmung eines flächig ausgebildeten Kraftfahrzeugbauteils. Die Erfindung betrifft weiterhin eine Anordnung aus einer derartigen Durchführungsvorrichtung und einem derartigen flächig ausgebildeten Kraftfahrzeugbauteil. Weiterhin betrifft die Erfindung ein Klimaanlagengehäuse mit wenigstens einer Ausnehmung. Schließlich betrifft die Erfindung ein Verfahren zur Anpassung einer Kraftfahrzeugklimaanlage an unterschiedliche Kältemittel.

Zum derzeitigen Zeitpunkt ist das übliche Kältemittel, das bei Kraftfahrzeugklimaanlagen eingesetzt wird, das sogenannte R134a. Es bietet vielfältige Vorzüge. Beispielsweise ist es relativ kostengünstig verfügbar, ist nicht brennbar, ist ungiftig und ist bei relativ niedrigen Drücken verwendbar. Mittlerweile hat sich jedoch ein Umweltproblem bei der Verwendung von R134a herauskristallisiert. R134a weist nämlich ein sehr hohes Erderwärmungspotential (GWP = global warming potential) auf.

Aufgrund umweltmotivierter gesetzlicher Vorgaben, beispielweise auf dem Gebiet der Europäischen Union, wird derzeit der Einsatz alternativer Kältemittel für die Verwendung in Kraftfahrzeugen erforscht, welche ein niedrigeres Erderwärmungspotential (GWP) aufweisen. Der derzeit bevorzugte Kandidat ist R744 (CO₂, Kohlendioxid).

Der Einsatz von unterschiedlichen Kältemitteln bedingt eine entsprechende Anpassung der einzelnen Komponenten der Kraftfahrzeugklimaanlage. Im Falle von R744 als Kältemittel müssen beispielsweise die Kältemittelleitungen auf die höheren Betriebsdrücke angepasst werden.

Dies macht auch eine entsprechende Anpassung des den Verdampfer aufnehmenden Klimaanlagengehäuses erforderlich. Insbesondere die Größe der Durchführungsöffnungen, durch die die Kättemittelleitungen in das Klimaanlagengehäuse hineingeführt, bzw. aus diesem herausgeführt werden, muss entsprechend angepasst werden.

Das Vorsehen von Durchführungsöffnungen mit einer geeigneten Dimensionierung an sich ist im Stand der Technik bekannt. Mögliche Arten der Durchführung von einzelnen Kältemittelrohren durch eine Wand, wie beispielsweise die Gehäusewand eines Klimaanlagengehäuses sind in DE 10 2005 039 796 A1 oder DE 199 49 131 A1 beschrieben.

Auch ist es bekannt, eine Ausnehmung vorzusehen, in die ein Anschlussflansch einer oder mehrerer Kältemittelleitungen eingesetzt werden kann. Dies ist beispielsweise in DE 100 03 254 A1 beschrieben, wo der Anschlussflansch des Verdampfers in eine geeignet ausgebildete Öffnung des Klimaanlagengehäuses gesteckt wird. Ein dazu ähnliches System ist in DE 100 60 105 A1 beschrieben.

Es ist davon auszugehen, dass in Ländern, in denen (noch) keine entsprechenden gesetzlichen Vorgaben vorhanden sind, aus Kostengründen weiterhin R134a zum Einsatz kommen wird. Dementsprechend wird es aller Wahrscheinlichkeit nach in Zukunft zu einer Parallelproduktion von Kraftfahrzeugen mit einer auf R134a als Kältemittel basierenden Klimaanlage und Kraftfahrzeugen mit einer auf R744 als Kältemittel (ggf. auch einem dazu alternativen Kätemittel) basierenden Klimaanlage kommen.

Wie oben bereits erwähnt, ist es daher erforderlich, zwei unterschiedliche Klimaanlagengehäuse zu konstruieren, herzustellen, vorrätig zu halten und zu verbauen, die jeweils auf das entsprechende Kältemittel angepasst sind

Andererseits ist es aus Kostengründen und Lagerhaltungsgründen wünschenswert, dass so wenig Bauteile wie möglich in unterschiedlichen, auf das jeweilige Kältemittel angepassten Bauausführungen vorgesehen werden.

Ein weiteres Problem taucht darüber hinaus dadurch auf, dass bei der Verwendung von R744 aus Sicherheitsgründen die Kältemittelleitungen des Verdampfers unlösbar mit dem Übergabeflansch bzw. dem Expansionsventil verbunden sein müssen. Dadurch ist es nicht mehr möglich, die Fluidleitungen einzeln durch dazu korrespondierende (Rund-)löcher zu stecken, und erst anschließend den Anschlussflansch auf die Fluidleitungen aufzustecken.

Die Aufgabe der Erfindung ist es daher, eine Möglichkeit zu schaffen, Kältemittelleitungen einer Krafifahrzeugklimaanlage auf vorteilhafte und kostengünstige Weise durch eine Wand hindurchzuführen, auch wenn ein anderes Kältemittel, wie insbesondere R744 verwendet wird.

Die vorgeschlagene Durchführungsvorrichtung, die vorgeschlagene Anordnung aus Durchführungsvorrichtung und flächig ausgebildetem Kraftfahrzeugbauteil, das vorgeschlagene Kraflfahrzeugklimaanlagengehäuse, sowie das vorgeschlagene Verfahren zur Anpassung einer Kraftfahrzeugklimaanlage an unterschiedliche Kältemittel lösen diese Aufgabe.

Es wird vorgeschlagen, eine Durchführungsvorrichtung für Fluidrohrleitungen zur Montage in der Ausnehmung eines flächig ausgebildeten Kraftfahrzeugbauteils, welche wenigstens einen Grundkörper mit wenigstens einer Durchgangsöffnung zur Aufnahme einer Fluidrohrleitung aufweist, mit wenigstens einer Einbringvorrichtung zum seitlichen Einbringen der zumindest einen Fluidrohrleitung in die Durchgangsöffnung zu versehen. Dadurch ist es auf einfache Weise möglich, eine Mehrzahl von Fluidleitungen durch die Durchführungsvorrichtung hindurchzuführen. Durch das seitliche Einschieben ist es weiterhin möglich, die Durchführungsvorrichtung beispielsweise hinter einem fest mit den Fluidrohrleitungen verbundenen Flansch zu montieren. Die Durchführungseinrichtung weist dabei vorzugsweise eine Größe (Fläche) auf, die größer ist als die Umrissfläche der durch die Durchführungsvorrichtung durchgeführten Fluidrohrleitungen bzw. größer ist als eine maximale Querschnittsverdickung der Fluidrohrleitungen bzw. einer mit dieser verbundenen Komponente. Im Falle eines fest mit den Fluidleitungen verbundenen Anschlussflansches kann es sich hier beispielsweise um den Querschnitt des Anschlussflansches handeln. Unter einem seitlichen Einschieben ist ein Einschieben in eine Richtung zu verstehen, die zumindest teilweise von der Längsrichtung (Axialrichtung) zumindest eines, vorzugsweise aller Fluidrohrleitungen abweicht. Insbesondere kann es sich um eine Bewegung handeln die zumindest teilweise in einer in etwa senkrecht zu der Längsrichtung der Fluidrohrleitungen stehenden Ebene verläuft (Tangentialrichtung, Radialrichtung). Dies schließt eine Bewegung in Axialrichtung der Ffuidrohrleitungen selbstverständlich nicht aus, insbesondere dann nicht, wenn die Durchführungsvorrichtung bereits an den Fluidrohrleitungen montiert ist. Die Durchführungsvorrichtung kann in einer gewissen Standardgröße vorgesehen werden, oder aber auch auf den jeweiligen Einsatzzweck hin optimiert werden. Insbesondere ist es auch möglich, die jeweilige Durchführungsvorrichtung zumindest mittelbar in Abhängigkeit vom gewählten Kältemittel vorzusehen. Der Grundkörper ist bevorzugt starr ausgebildet, wobei unter einem starren Grundkörper ist insbesondere ein Grundkörper zu verstehen, welcher sich unter einer Krafteinwirkung nur geringfügig verbiegt. Als Material eignen sich beispielsweise Hartplastik und Metalle bzw. Metalllegierungen. Alternativ ist der Grundkörper auch aus einem elastischen Material gebildet, insbesondere aus einem Elastomer.

Möglich ist es, die Durchführungsvorrichtung so auszubilden, dass diese in eine Einbringstellung zum seitlichen Einbringen der zumindest einen Fluidrohrleitung und eine Verschlussstellung zur Montage in der Ausnehmung des flächig ausgebildeten Kraftfahrzeugbauteils gebracht werden kann. Dabei kann die Durchführungsvorrichtung in der Verschlussstellung verrastbar ausgeführt sein. Dadurch kann einerseits eine einfache Montage der Durchführungsvorrichtung an den Fluidrohrleitungen ermöglicht werden (Einbringstellung). Andererseits kann ein fester und dauerhafter Halt realisiert werden (Verschlussstellung), der sich gegebenenfalls unter realistischen Bedingungen nicht von alleine lösen kann. Selbstverständlich ist es auch möglich, noch weitere Stellungen vorzusehen, in denen gegebenenfalls auch eine Art "Zwischenverrastung" vorgesehen werden kann. Die Verrastung kann beispielsweise durch ein federbelastetes Einschnappen, ein federbelastetes Zusammenhalten in der Verschlussstellung oder durch ein clipsartiges Verrasten realisiert werden. Selbstverständlich ist auch ein Verschrauben zu denken.

Möglich ist es weiterhin, die Durchführungsvorrichtung derart auszubilden, dass diese einteilig aufgebaut ist. Dabei kann wenigstens eine Einbringvorrichtung als schlitzartige Vorrichtung, Scharniervorrichtung, Filmscharniervorrichtung oder Klappvorrichtung ausgebildet sein. Eine schlitzartige Vorrichtung kann dabei einen besonders einfachen Aufbau der Durchführungsvorrichtung gewährleisten. Die Durchführungsvorrichtung kann dann auf einfache Weise seitlich auf die Fluidrohrleitungen aufgesteckt werden. Wenn eine Scharniervorrichtung, Filmschamiervorrichtung bzw. Klappvorrichtung vorgesehen ist, kann durch das dann mögliche "Aufweiten" der Durchführungsvorrichtung eine besonders einfache Montage der Durchführungsvorrichtung an den Fluidrohrleitungen sowie ein besonders fester, dauerhafter und abdichtender Halt der Durchführungsvorrichtung an den Fluidrohrleitungen ermöglicht werden. Eine einteilige Durchführungsvorrichtung kann insbesondere einen besonders einfachen und kostengünstigen Aufbau ermöglichen. Darüber hinaus kann die Lagerhaltung vereinfacht werden. Auch die Montage kann sich einfacher gestalten, da keine (einzelnen) Teile verloren gehen bzw. vertauscht werden können.

Weiterhin ist es denkbar, die Durchführungsvorrichtung so auszubilden, das diese mehrteilig, vorzugsweise zweiteilig ausgebildet ist. Weiterhin können symmetrisch ausgebildete und/oder identisch ausgebildete und/oder miteinander verrastbare Baugruppen vorgesehen werden. Mit einer zwei- oder mehrteilig ausgebildeten Durchführungsvorrichtung kann der Aufbau der einzelnen Komponenten gegebenenfalls derart einfach sein, dass auch die resultierende Gesamtvorrichtung einen besonders einfachen und kostengünstigen Aufbau aufweisen kann. Auch kann die Montage einfach gestaltet werden, selbst wenn besonders ungünstig angeordnete Fluidrohrleitungsanordnungen vorhanden sind. Sind zumindest Teile der Baugruppen symmetrisch oder sogar identisch ausgebildet, so können sich Konstruktion, Produktion und Lagerhaltung nochmals vereinfachen. Eine einfache und schnelle Montage kann insbesondere dann gewährleistet werden, wenn die einzelnen Baugruppen miteinander verrastet werden können. Hierbei ist insbesondere an ein Ineinanderstecken und speziell an ein clipsartiges Verrasten der einzelnen Baugruppen miteinander zu denken.

Es kann sich als vorteilhaft erweisen, wenn die Durchführungsvorrichtung wenigstens einen Aufnahmeraum zur zumindest teilweisen Aufnahme zusätzlicher Baugruppen innerhalb der Durchführungsvorrichtung aufweist. Beispielsweise kann dann ein Verbindungsflansch oder ein Expansionsventil zumindest teilweise von der Durchführungsvorrichtung aufgenommen werden. Dadurch kann ein besonders kompakter Aufbau der resultierenden Gesamtanordnung ermöglich werden. Auch kann die Durchführungsvorrichtung selbst gegebenenfalls mit weniger Materialverbrauch hergestellt werden. Durch die, zumindest teilweise Aufnahme kann darüber hinaus eine Halterung der entsprechenden Baugruppe (Verbindungsflansch, Expansionsventil) ermöglicht werden, so dass zum Beispiel höhere Kräfte auf die Baugruppe ausgeübt werden können, ohne dass die Fluidrohrleitungen verbogen oder' geschädigt werden. Beispielsweise können bei der Verbindung des Verbindungsflanschs mit weiterführenden Fluidrohrleitungen höhere Anzugsdrehmomente ausgeübt werden, da diese zumindest teilweise von der Durchführungsvorrichtung aufgenommen werden können.

Möglich ist es auch, dass die Durchführungsvorrichtung zumindest mit einem Dichtmittel versehen wird, welches insbesondere im Bereich wenigstens einer Durchgangsöffnung und/oder im Bereich einer Einbringvorrichtung und/oder in einem Kontaktbereich mit dem flächig ausgebildeten Kraftfahrzeugbauteil und/oder in einem Kontaktbereich mit einer weiteren Baugruppe vorgesehen ist. Dadurch kann eine besonders dichte, insbesondere spritzwassergeschütze, wasserdichte und/oder gasdichte Anordnung realisiert werden. Dadurch kann ein unerwünschter Luftverlust (Wärme-/Kälteverlust) verhindert werden. Auch kann eine derartige Ausführung sicherheitsfördemd sein, da beispielsweise im Falle eines Lecks bei einer Verbindungsstelle zwischen Kältemittel führenden Leitungen das Kältemittel nicht in den Fahrgastinnenraum gelangen kann. Als Dichtmittel können beispielsweise O-Ringe, Gummimanschetten, Siliconmanschetten, Korkdichtungen, Schaumdichtungen oder anderweitige elastische, vorzugsweise gummielastische oder elastomere Komponenten verwendet werden. Für den Fall, dass der Grundkörper aus einem elastischen Material gebildet ist, können die Dichtmittel aus demselben Material bestehen und insbesondere integral mit diesem ausgebildet sein.

Weiterhin wird eine Anordnung aus einer Durchführungsvorrichtung mit dem oben beschriebenen Aufbau und einem flächig ausgebildeten Kraftfahrzeugbauteil vorgeschlagen. Bei dem flächig ausgebildeten Kraftfahrzeugbauteil kann es sich insbesondere um die Wand eines Klimaantagengehäuses (beziehungsweise um das Klimaanlagengehäuse selbst), um eine Spritzwand oder um ein strukturelle Karosseriebauteil (beispielsweise ein Thermostrukturelement) handeln. Eine derartig ausgebildete Anordnung kann die bereit beschriebenen Vorteile in analoger Weise aufweisen.

Vorteilhaft ist es, ein Kraftfahrzeugklimaanlagengehäuse mit wenigstens einer Ausnehmung zur Anordnung einer Durchführungsvorrichtung mit dem oben beschriebenen Aufbau zu versehen, wobei insbesondere unterschiedlich gestaltete Durchführungsvorrichtungen eingesetzt werden können. Auf diese Weise ist es auf besonders einfache Weise möglich, das Kraftfahrzeugklimaanlagengehäuse an unterschiedliche Kältemittel anzupassen. Es kann beispielsweise für jedes verwendete Kältemittel (und damit für die entsprechend angepassten Komponenten) eine geeignet ausgebildete Durchführungsvorrichtung vorgesehen werden.

Darüber hinaus wird ein Verfahren zur Anpassung einer Kraftfahrzeugklimaanlage an unterschiedliche Kältemittel vorgeschlagen, bei dem die in die Kraftfahrzeugklimaanlage hineingehenden bzw. die aus dieser hinausgehenden Fluidleitungen durch eine Gehäuseöffnung der Kraftfahrzeugklimaanlage mit einer großen Durchtrittsfläche geführt werden, wobei die Gehäuseöffnung durch eine Adapterplatte verschlossen wird, durch welche die einzelnen Fluidleitungen hindurchgeführt werden. Das Verfahren kann in entsprechender Weise mittels der bereits beschriebenen Weiterbildungsmöglichkeiten weitergebildet werden. Es kann die bereits beschriebenen Vorteile in analoger Weise aufweisen.

Die Erfindung wird im Folgenden unter Bezugnahme auf die beigefügte Zeichnung unter Verwendung von Ausführungsbeispielen näher erläutert. Es zeigt:
- Fig. 1:: Ein erstes Ausführungsbeispiel einer Durchführungsvonichtung mit darin aufgenommenen Rohren in Draufsicht von vorne;
- Fig. 2:: Die in Fig. 1 gezeigte Durchführungsvorrichtung im eingebauten Zustand in perspektivischer Ansicht;
- Fig. 3:: Die in Fig. 1 gezeigte Durchführungsvorrichtung im eingebauten Zustand im schematischen Querschnitt von oben gesehen;
- Fig. 4:: Ein zweites Ausführungsbeispiel einer Durchführungsvorrichtung in eingebautem Zustand in perspektivischer Ansicht;
- Fig. 5:: Die in Fig. 4 gezeigte Durchführungsvorrichtung im eingebauten Zustand im schematischen Querschnitt von oben gesehen.

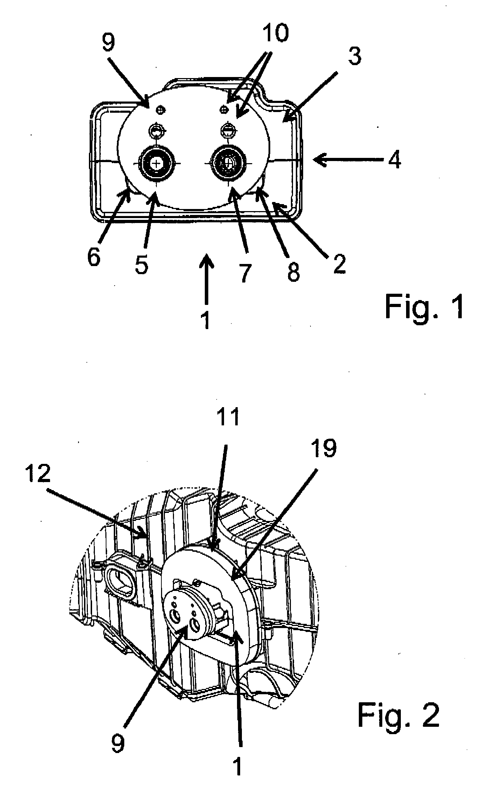

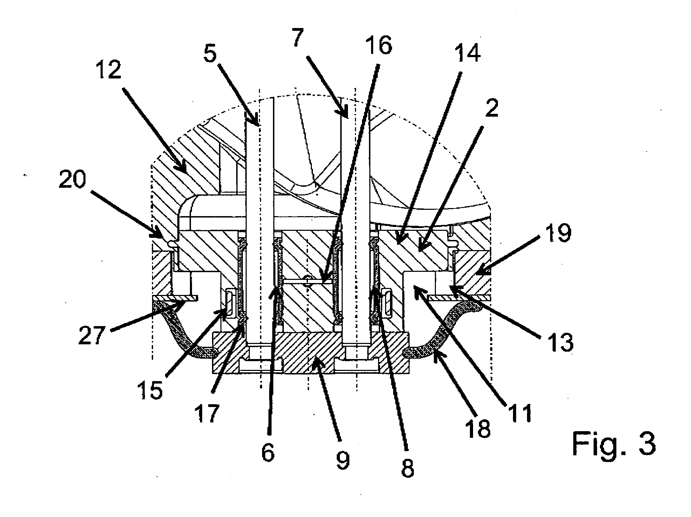

In Fig. 1 ist eine zweiteilige Rohrdurchführungsplatte 1 in vereinfachter Draufsicht dargestellt. Die Rohrdurchführungsplatte 1 weist eine obere Hälfte 3 und eine untere Hälfte 2 auf. Die beiden Hälften 2, 3 sind entlang einer Verbindungslinie 4 miteinander verbunden, wobei die beiden Hälften 2, 3 unter Verwendung von Clipsverbindungen 15 (vgl. Fig. 3) aneinander befestigt sind.

Zwischen den beiden Hälften 2, 3 der Rohrdurchführungsplatte 1 ist ein Rohrpaar 5, 7 eingelegt. Jeweils ein Rohr 5, 7 wird durch eine dazu korrespondierende Durchgangsöffnung 6, 8 hindurchgeführt. Die beiden Rohre 5, 7 münden in einen Verbindungsflansch 9. In der Draufsicht von Fig. 1 sind die Enden der beiden Rohre 5, 7, die mit dem Verbindungsflansch 9 bevorzugt unlösbar verbunden und vorliegend verlötet sind, zu erkennen. Mit Hilfe des Verbindungsflansches 9 können die Rohre mit weiteren Komponenten verbunden werden. Zur Herstellung einer mechanisch festen Verbindung mit derartigen weiteren Baugruppen dienen beispielsweise die im Verbindungsflansch 9 zu erkennenden Bohrungen 10, die beispielsweise mit einem Gewinde versehen sein können oder aber auch als reine Zentrierbohrungen ausgebildet sein können. Die dargestellten Rohre 5, 7 bzw. der Verbindungsflansch 9 sind für die Verwendung mit R744 ausgelegt.

In Fig. 2 ist die in Fig. 1 dargestellte Rohrdurchführungsplatte 1 nochmals in perspektivischer Ansicht dargestellt. Die Rohrdurchführungsplatte 1 ist dabei in eine korrespondierende Ausnehmung 11 eingesetzt, die im Gehäuse 12 einer Kraftfahrzeugklimaanlage ausgebildet ist. Die Rohrdurchführungsplatte 1 befindet sich in der Ausnehmung 11 und ist in geeigneter Weise mit dem Gehäuse befestigt.

In Fig. 3 ist die in Fig. 2 gezeigte Anordnung in einem schematischen Querschnitt von oben gesehen dargestellt. Der Schnitt verläuft längs der Verbindungslinie 4, so dass die Oberkante 14 der unteren Hälfte 2 der Rohrdurchführungsplatte 1 zu erkennen ist. Die Rohre 5, 7, bei denen es sich beispielsweise um die Kältemittelversorgung des Verdampfers handeln kann, verlaufen jeweils durch die dazu korrespondierend ausgebildete Durchgangsöffnung 6, 8. Wie bereits erwähnt, sind die Enden der Rohre 5, 7 speziell im Falle von R744 mit dem Verbindungsflansch 9 dauerhaft verlötet. Zu erkennen ist weiterhin die Clipsverbindung 15, mit Hilfe derer die obere Hälfte 3 und die untere Hälfte 2 mechanisch miteinander verbunden sind. Die Clipsverbindung 15 ist vorzugsweise so ausgeführt, dass diese beispielsweise zu Wartungszwecken gelöst werden kann.

Die Rohrdurchführungsplatte 1 ist in der Ausnehmung 11 des Gehäuses 12 der Kraftfahrzeugklimaanlage eingesetzt. Die Rohrdurchführungsplatte 1 ist in geeigneter Weise an dem Gehäuse 12 der Kraftfahrzeugklimaanlage befestigt. Dies kann beispielsweise durch einen (durchbrochenen) Deckel 13 oder wie in Fig.3 dargestellt durch eine Nut-Feder Verbindung mit dem Gehäuse 12 erfolgen. Zusätzlich ist in Figur 3 die Stimwand 27 zu erkennen, an der das Gehäuse 12 der Klimaanlage befestigt wird. Aus Übersichtlichkeitsgründen ist die Stirnwand nur in Figur 3 dargestellt und nur teilweise dargestellt.

Um die Dichtigkeit der gesamten Anordnung zu erhöhen können, wie in Fig. 3 dargestellt, unterschiedliche Dichtungselemente 16, 17, 18, 19, 20 vorgesehen werden. Je nach Anforderung ist es jedoch ebenso möglich, auf einzelne oder sogar auf alle zusätzlichen Dichtungselemente zu verzichten, oder aber auch im Gegenteil weitere Dichtungselemente vorzusehen.

Im in Fig. 3 dargestellten Ausführungsbeispiel ist zwischen der oberen 3 und der unteren 2 Hälfte der Rohrdurchführungsplatte 1 ein Dichtungsband 16 vorgesehen. Weiterhin ist jeweils zwischen einem Rohr 5, 7 und der dazu korrespondierenden Durchgangsöffnung 6, 8 eine hülsenartig ausgeführte Ringdichtung 17 vorgesehen. Die Ringdichtungen 17 können nicht nur der zusätzlichen Abdichtung dienen, sondern können gleichzeitig einen Toleranzausgleich bewirken. Auch kann mit Hilfe der Ringdichtungen 17 gegebenenfalls eine Geräuschbildung durch "Klappern" vermieden werden. Eine weitere Dichtung ist in Form einer Dichtungslippe 18 zwischen Verbindungsflansch 9 und Stirnwand 27 vorgesehen. Weiterhin ist zwischen der Sfimwand 27 und dem Gehäuse 12 der Kraftfahrzeugklimaanlage eine Stirnwanddichtung 19, beispielsweise aus einem Dichtungsschaum vorgesehen. Auch zwischen der Außenseite der Rohrdurchführungsplatte 1 und der Ausnehmung 11 im Gehäuse 12 der Kraftfahrzeugklimaanlage ist im dargestellten Beispiel eine Dichtung 20 vorgesehen.

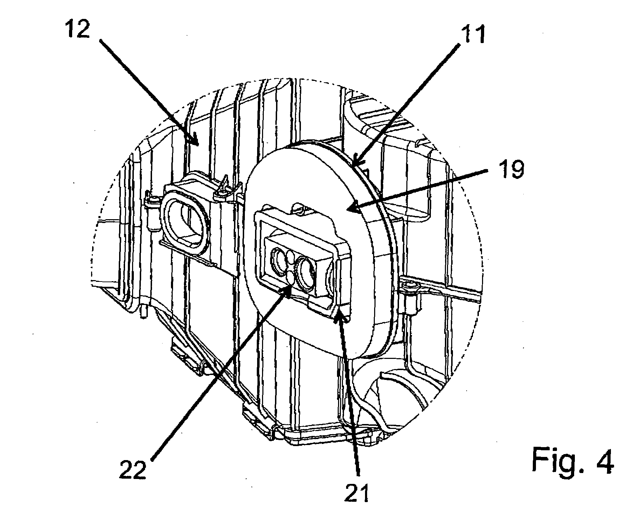

In Fig. 4 ist ein weiteres Ausführungsbeispiel einer Rohrdurchführungsplatte 21 in perspektivischer Ansicht zu erkennen. Die Rohrdurchführungsplatte 21 ist in der dazu korrespondierenden Ausnehmung 11 eingesetzt, die im Gehäuse 12 einer Kraftfahrzeugklimaanlage ausgebildet ist. Die Außenabmessungen des Gehäuses 12 und insbesondere die im Gehäuse 12 ausgebildete Ausnehmung 11 sind zu dem im Fig. 2 dargestellten Gehäuse bzw. der dort dargestellten Ausnehmung 11 identisch. Ebenso wie in Fig. 2, besteht die Rohrdurchführungsplatte 21 aus zwei miteinander verbundenen Einzelteilen und ist in geeigneter Weise mit dem Gehäuse 12 der Kraftfahrzeugklimaanlage verbunden.

Abweichend von dem in Fig. 2 dargestellten Beispiel wird die in Fig. 4 dargestellte Kraftfahrzeugklimaanlage mit R134a als Kältemittel betrieben. Anstelle eines Verbindungsflansches kann daher ein thermostatisch gesteuertes Expansionsventil 22 an den Rohrenden 5, 7 angeordnet werden. Die Rohrdurchführungsplatte 21 kann dabei unter anderem so ausgeführt werden, dass das Expansionsventil 22 zu einem großen Anteil von der Rohrdurchführungsplatte 21 aufgenommen ist. Selbstverständlich ist es aufgrund des geänderten Kältemittels erforderlich, auch an anderen Stellen entsprechende Anpassungen vorzunehmen. Somit können insbesondere auch das Gehäuse 12 beziehungsweise die darin angeordneten Komponenten entsprechende Anpassungen aufweisen.

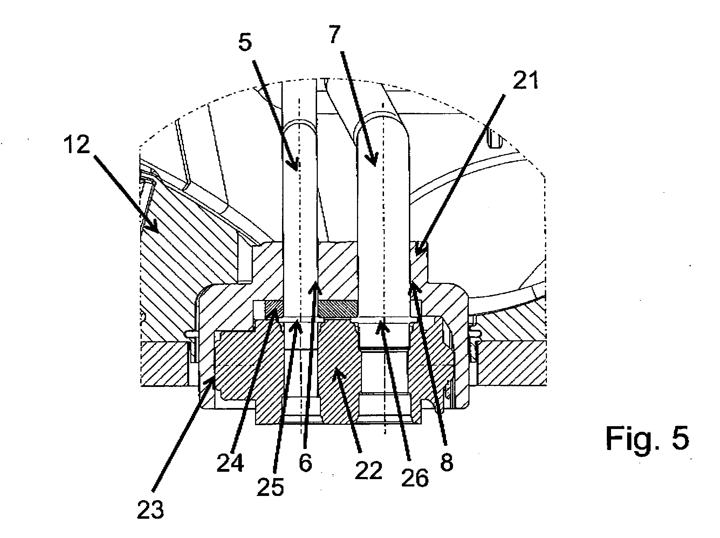

In Fig. 5 ist die in Fig. 4 perspektivisch dargestellte Anordnung in einer schematischen Querschnittsansicht von oben gesehen dargestellt. Die Rohre 5, 7 verlaufen durch die dazu korrespondierenden Durchgangsöffnungen 6, 8. Im Bereich der Enden der Rohre 5, 7 sind diese mit einer umlaufenden Auskragung 25, 26 versehen. Die Enden der Rohre 5, 7 selbst sind in korrespondierende Anschlussöffnungen des Expansionsventils 22 eingesteckt. Die Auskragungen 25, 26 der Rohre 5, 7 werden von einer Gegenplatte 24 hintergriffen, so dass die Rohre 5, 7 in Ihrer Position fixiert sind.

Ebenfalls ist in Fig. 5 die Anordnung großer Teile des Expansionsventils 22 in einer wannenartigen Vertiefung 23 innerhalb der Rohrdurchführungsplatte 21 zu erkennen. Ähnlich wie im Zusammenhang mit Fig. 3 beschrieben, können auch vorliegend an unterschiedlichen Orten Dichtungen vorgesehen werden, um die Dichtigkeit der Anordnung zu erhöhen.

## Patentansprüche

1. Durchführungsvorrichtung (1, 21) für Fluidrohrleitungen (5, 7) zur Montage in der Ausnehmung (11) eines flächig ausgebildeten Kraftfahrzeugbauteils (12), aufweisend wenigstens einen Grundkörper (2, 3) mit wenigstens einer Durchgangsöffnung (6, 8) zur Aufnahme einer Fluidrohrleitung, **gekennzeichnet durch** wenigstens eine Einbringvorrichtung (4) zum seitlichen Einbringen der zumindest einen Fluidrohrleitung in die Durchgangsöffnung.

2. Durchführungsvorrichtung nach Anspruch 1, **dadurch gekennzeichnet, dass** der Grundkörper starr ausgebildet ist.

3. Durchführungsvorrichtung nach Anspruch 1 oder 2, **dadurch gekennzeichnet, dass** diese in eine Einbringstellung zum seitlichen Einbringen der zumindest einen Fluidrohrleitung (5, 7) und eine Verschlussstellung (15) zur Montage in der Ausnehmung (11) des flächig ausgebildeten Kraftfahrzeugbauteils (12) gebracht werden kann und vorzugsweise in der Verschlussstellung verrastbar (15) ist.

4. Durchführungsvorrichtung nach einem der Ansprüche 1 bis 3, **dadurch gekennzeichnet, dass** die Durchführungsvorrichtung (1, 21) einteilig aufgebaut ist und insbesondere wenigstens eine Einbringvorrichtung als schlitzartige Vorrichtung (4), Schamiervorrichtung, Filmscharniervorrichtung oder Klappvorrichtung ausgebildet ist.

5. Durchführungsvorrichtung nach einem der Ansprüche 1 bis 3, **dadurch gekennzeichnet, dass** die Durchführungsvorrichtung (1, 21) mehrteilig, vorzugsweise zweiteilig (3, 4) ausgebildet ist und insbesondere symmetrisch ausgebildete und/oder identisch ausgebildete und/oder miteinander verrastbare (15) Baugruppen aufweist.

6. Durchführungsvorrichtung nach einem der vorangehenden Ansprüche, aufweisend wenigstens einen Aufnahmeraum (23) zur zumindest teilweisen Aufnahme zusätzlicher Baugruppen (22) innerhalb der Durchführungsvorrichtung.

7. Durchführungsvorrichtung nach einem der vorangehenden Ansprüche, aufweisend zumindest ein Dichtmittel (16, 17, 18, 19, 20), welches insbesondere im Bereich wenigstens einer Durchgangsöffnung (6, 8, 17) und/oder im Bereich einer Einbringvorrichtung (4, 16) und/oder in einem Kontaktbereich mit dem flächig ausgebildeten Kraftfahrzeugbauteil (12, 13, 18, 19) und/oder in einem Kontaktbereich mit einer weiteren Baugruppe (11, 20) vorgesehen ist.

8. Anordnung aus einer Durchführungsvorrichtung (1, 21) gemäß einem der Ansprüche 1 bis 7 und einem flächig ausgebildeten Kraftfahrzeugbauteil (12), insbesondere einer Wand eines Klimaanlagengehäuses und/oder einer Spritzwand und/oder einem strukturellen Karosseriebauteil.

9. Kraftfahrzeugklimaanlagengehäuse (12) mit wenigstens einer Ausnehmung (11) zur Anordnung einer Durchführungsvorrichtung (1, 21) gemäß einem der Ansprüche 1 bis 7, wobei insbesondere unterschiedlich gestaltete Durchführungsvorrichtungen eingesetzt werden können.

10. Verfahren zur Anpassung einer Kraftfahrzeugklimaanlage (12) an unterschiedliche Kältemittel, wobei die in die Kraftfahrzeugklimaanlage (12) hineingehenden bzw. die aus dieser hinausgehenden Fluidleitungen (5, 7) durch eine Gehäuseöffnung (11) der Kraftfahrzeugklimaanlage (12) mit einer großen Durchtrittsfläche geführt werden, wobei die Gehäuseöffnung (11) durch eine Adapterplatte (1, 21) verschlossen wird, durch welche die einzelnen Fluidleitungen (5, 7) hindurchgeführt werden.

11. Verfahren nach Anspruch 10, **dadurch gekennzeichnet, dass** als Adapterplatte eine Durchführungsvorrichtung (1, 21) nach einem der Ansprüche 1 bis 7 verwendet wird.
